# EUROPEAN PATENT APPLICATION

(11) **EP 0 691 492 A1**
(43) Date of publication of application: **10.01.1996**
(21) Application number: 95500058.3
(22) Date of filing: 25.04.1995
(51) Int. Cl.: F16K 1/00, F16K 1/12, F16K 31/528

(54) **Valve device**

(30) Priority: 29.06.1994 ES 9401815 U; 04.07.1994 ES 9401858 U
(71) Applicant: Fernandez Lopez, Marcelo, E-08940 Cornella de Llobregat (Barcelona) (ES)
(72) Inventor: Fernandez Lopez, Marcelo, E-08940 Cornella de Llobregat (Barcelona) (ES)
(74) Representative: Perez Bonal, Bernardo

(57) **Abstract**

The invention refers to a valve device of a type such that it may be inserted within a water conduit or fitted at its end, made up of an internal piston 1 hollow and close ended at its sealing end 2, piston that moves within a guiding conduit 5 that joins a sealing chamber 4 where the piston 1 forms a seat closing the passage to the water that flows axially to the piston and pushes upon the blind end 2 close to which are fitted outlet orifices 11 for the liquid that comes in through an access opening 17 and exits out of another 19, fitted in a narrowing made in the sealing chamber 4, chamber 4 that shuts or opens the piston 1 axially displaced through the action of an external actuation coupling 16 connected to the piston 1 through a window made in the guiding conduit and capable of transforming the turning movement of the coupling 16 in linear movement of the piston 1, having fitted to the piston 1 on both sides of the window 8, o-ring retainers 6 that ensure proper sealing conditions between the piston itself and its guiding chamber 5.

## Description

### OBJECT OF THE INVENTION

The object of the invention is a valve device specially designed for water installations, making up a terminal that keeps shut or opens up a conduit allowing the passage of fluid through its conduction system.

Although the valve device object of this invention has been designed specifically for water conduits, it may also be applied in respect of conduits to be used for any other type of fluids, whether corrosive or not, and even for gas type fluids, given that its constitution is such that a sealed closure is obtained, in which the pressure existing within the conduit fully guarantees valve sealing, so that it successfully withstands any kind of leakage.

### BACKGROUND OF THE INVENTION

Up to now exist, as elements already known in the art, flat seating valves such as the ones used in the old screw spindle, ball valve and butterfly valve operated taps, all of them commercially sold, with an abundant offer from various manufacturers. From among all the valve devices the most common is the domestically used water tap, in which a flat washer goes up and down attached to a screw operated spindle, thus closing a seat arranged between the fluid inlet and outlet orifices in the body of the tap. The taps of this type break down easily and are subjected to wear at various points, due to which it is then necessary to introduce packing elements such as special twine or silicone tape to seal moving parts. They are not furthermore prepared to withstand large pressures, for which reason, as a major defect, they have a tendency to leak.

The ball valves, which present a mechanically more sophisticated construction and have over traditional taps the advantage of a safer action and a more effective closure have as a drawback that their machining has to be very accurate, and are consequently expensive. It may furthermore be worthwhile to point out that they also tend to freeze with ease, making it difficult to open them, and that their part wear problems are difficult to solve unless it is in units fitted with interchangeable seats capable of regulation so that they may effect a continuous and firm action in respect of the ball, ball that because of wear must be necessarily replaced.

Finally, butterfly valves are reserved for tasks involving the so called semi-fluids, which are not applicable in this case because they are not generally used in liquid conduits.

The fundamental advantage of the valve device proposed by this invention is the fact that it may be easily machined, has guaranteed sealing performance using simple o-rings and presents a simple and inexpensive mechanical constitution.

### DESCRIPTION OF THE INVENTION

The invention being described arises from two Spanish utility models number U 9401815 and U 9401858, from the first of which this specification takes its name and of which texts it is a faithful adaptation as it has the same inventive essence and shows two practical possibilities of execution, encompassing within one invention unit the fundamental fact that shall be reflected throughout this text and the illustrations accompanying it.

In accordance with the foregoing, the valve device object of this invention is made up of close ended piston fitted with liquid passage side openings or orifices whereas at its front it rests upon a valve seat fitted in the internal outlet opening with a sealing chamber in which said piston moves up or down.

The piston is guided inside the conduit and incorporates actuating means that allow it to move within the conduit in which it is guided.

The piston has been fitted with two sealing retainers that prevent the exit of liquid through the actuating means so that no leaks may take place when the piston is in any of the two relative positions that it may occupy.

The guiding methods, in accordance with the proposals of the Spanish utility model U 9401815 are made up of a spindle that goes through the guiding chamber through a slanted window at which ends have been arranged two sections perpendicular to the piston displacement axis. These end sections make up the end of stroke in which the piston reaches its maximum opening and closure positions, being its position unmovable in the absence of an intended actuation.

In accordance with the proposal of the Spanish utility model U 9401858, the guiding chamber is also fitted with a window, except that in this case it is rectangular and instead of a spindle has through it a cylindrical sector crossed by a helicoid making up a rack. The upper and lower edges of the window make up the piston displacement ends of stroke sections and in both cases an external coupling acts as the piston actuation means.

In fact, in the first proposal the spindle is attached to the external grooved coupling, whereas in the second one it is the coupling that is threaded in the inside and joins and causes the displacement of the toothed cylindrical sector attached to the piston.

It is important to emphasize that, whether in its elevation stroke or in its closing stroke, the piston does always leave its head outside the guiding chamber and always, also, outside the sealing chamber to which lead several orifices, radially arranged, fitted to the head of the piston and which communicate the sealing chamber with the guiding chamber, chamber that, whereas it narrows at its mouth, leaves free stroking room for the piston so that it may move. At the narrowing portion, the guiding chamber incorporates conventional threading means through which it is then possible to connect it to a water supply conduit which outlet is fitted with standardized threaded coupling means.

The water does then enter through the inlet mouth of the guiding chamber and makes its passage through the radial orifices made in the piston to the sealing chamber and if free, through the mouth of this chamber, arriving to the outlet conduit fitted with conventional coupling means for complementary elements such as, for example, flexible hoses.

The fore mentioned piston joins, either through the spindle or the laterally joined cylindric sector, through the window out of which it emerges, an external coupling advantageously milled, grooved or knurled so that it may be comfortably actuated without slipping; said coupling acts as a piston actuating element, transforming the helicoidal turning movement carried out in a rising or lowering displacement used to shut or free the mouth of the sealing chamber on which the frontal side of the piston head seats.

It is very important to highlight that the fact that the piston is hollow, pipe shaped and closed off at one of its ends allows the fluid pressure to exert a pushing force that translates into a strong closing pressure that ensures proper sealing of the assembly.

In order to properly illustrate everything described above, this specification includes a drawing sheet that schematically shows a purely illustrative execution example that does in no way limit the real possibilities of the invention.

### DRAWING DESCRIPTION

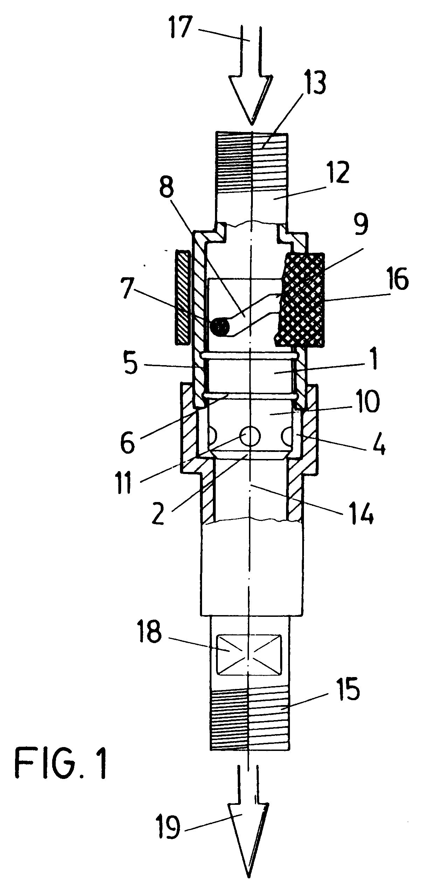

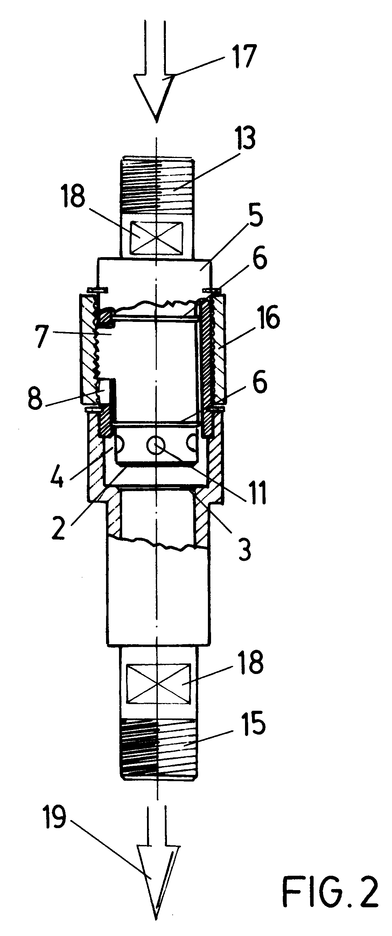

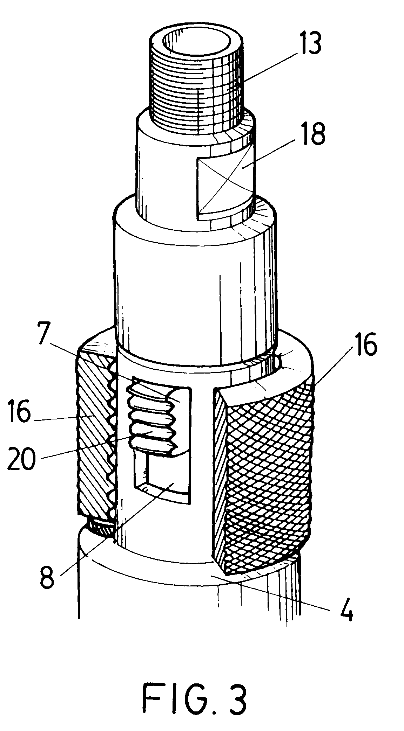

Figure one shows an elevation view with partial sections that facilitate the representation of internal parts; said figure corresponds to the only figure shown in U 9401815.

Figure two shows a view similar of the prior one but traced upon it, superimposing the parts that correspond to figure one of U 9401858 so that it may later allow a common reference.

Figure three shows a detail that corresponds to figure two of U 9401858 so that on observing said figures in accordance with the prior description and with the description below describing an execution of the invention, it shall then leave unquestionably clear the invention unit required by the Law and to which this compilation refers.

### DESCRIPTION OF AN EXECUTION EXAMPLE

In accordance with the above, the valve device object of the invention is made up of a piston 1 hollow and close ended at is lower end 2, but laterally fitted with openings or orifices 11 to provide liquid passage, whereas at its front 2 it is supported upon a valve seat arranged at the internal 3 outlet mouth of a sealing chamber 4 through which said piston moves in the upward and/or downward direction.

The piston 1 is acted upon by means 7 that move inside a window 8 made on the wall of the conduit 5 in which the piston slides and incorporates external 16 actuating means which, connected to the internal 7 means allow the displacement of said piston 1 inside the conduit 5 in which it is housed, displaced and guided.

The piston 1 has been fitted with two sealing retainers 6 that prevent the exit of liquid through the actuating means 7-16, so that no leaks may take place when the piston 1 is in any of the two relative positions that it may take.

The actuating means, in accordance with the proposals of the Spanish utility model U 9401815 are made up of a spindle 7 that goes through the guiding chamber 5 through a slanted window 8 at which ends have been arranged two sections 9 perpendicular to the piston displacement axis. These end sections 9 make up the end of stroke at which the piston 1 reaches its maximum opening and closure positions, being its position unmovable in the absence of an intended actuation.

In accordance with the proposal of the Spanish utility model U 9401858, the guiding chamber 5 is also fitted with a window 8, except that in this case it is rectangular and instead of a spindle has through it a cylindrical sector 7 crossed by a helicoid 20 making up a rack. The upper and lower edges of the window 8 make up the piston 1 displacement end of stroke sections and in both cases an external coupling 16 acts as the piston actuation means.

In the first proposal the spindle 7 is attached to the externally grooved coupling 16, whereas in the second one the coupling 16 is threaded in the inside and joins and causes the displacement of the cylindrical sector 7 with the toothed one 20 attached to the piston 1.

It is important to emphasize that, whether in its elevation stroke or in its closing stroke, the piston 1 does always leave its head 2 outside the guiding chamber 5 and always, also, outside the sealing chamber 4 to which lead the orifices 11, arranged in the head of the piston 1 and which communicate the sealing chamber 4 with the guiding chamber 5, chamber that, whereas it narrows at its mouth 12, leaves free stroke to the piston 1 so that it may move. At the narrowing portion, the guiding chamber incorporates conventional threading 13 means through which it is possible to connect to a conduit the water supply which outlet is fitted with standardized threaded coupling means, using the seating surfaces 13 and 18 for the application of a tightening tool.

The water does then enter through the guiding chamber 5 and through the radial orifices 11 made in the piston 1 to the sealing chamber 4 and if free, through the mouth of this chamber, arrive to the outlet conduit 19 fitted with conventional coupling 15 means for complementary elements such as, for example, flexible hoses.

The fore mentioned piston 1 joins, either through the spindle or the laterally joined cylindric sector 7, through the window 8 out of which it emerges, an external coupling 16 advantageously milled, grooved or knurled so that it may be comfortably actuated without slipping; said coupling acts as a piston actuating element, transforming the helicoidal turning movement carried out in a rising or lowering displacement to shut or free the mouth 3 of the sealing chamber on which the frontal side 2 of the piston head seats.

It is no considered necessary to extend the content of this patent specification any longer in order to enable an expert in the art to arrive to various conclusions that would enable him to put into practice the contents of the invention using the information contained herein.

## Claims

1. Valve device that, being of the type that may be inserted within a water conduit or fitted at its end, is characterized because it has an internal piston 1 hollow and close ended at its sealing end 2, piston that moves inside a guiding conduit 5 joined to a sealing chamber 4 where the piston 1 forms a seat closing the passage to the water which is axial to the piston and pushes upon the blind end 2 close to which there are outlet orifices 11 for the liquid that comes in through an inlet opening 17 and exit through another one 19, fitted in a narrowing effected in the sealing chamber 4, chamber 4 that closes or opens the piston 1 axially displaced through the action of an actuation external coupling 16 connected to the piston 1 through a window 8 fitted in the guiding conduit and capable of transforming the turning movement of the coupling 16 in linear movement of the piston 1, having fitted at the piston 1 on both sides of the window 8 o-ring retainers 7 that ensure proper sealing between the piston itself and the chamber 5 in which it is guided.

2. Valve device, as per the prior claim, characterized because the window 8 fitted in the guiding chamber 5 is optionally slanted and through its spindle 7 joins an external actuation coupling 16 that transforms circular movement to linear movement, being the slanted window 8 fitted with end of stroke and coupling immobilization surfaces 9.

3. Valve device as per the first claim characterized because the window 8 made in the guiding chamber is rectangular and through it comes out, joined to the piston 1, a cylindrical sector 7 affected by a helicoid 20 making up a rack in which is acts, axially immobilized, an actuation coupling 16 threaded in the inside.
